# FASCICULE DE BREVET EUROPEEN

(11) **EP 0 683 537 B1**
(45) Date de publication et mention de la délivrance du brevet: **14.01.1998**
(21) Numéro de dépôt: 95400871.0
(22) Date de dépôt: 19.04.1995
(51) Int. Cl.: H01M 10/40

(54) **Générateur électrochimique rechargeable au lithium à anode de carbone**
Lithium Sekundärbatterie mit Kohlenstoffanode
Lithium secondary battery with carbonaceous anode

(30) Priorité: 22.04.1994 FR 9404889
(43) Date de publication de la demande: 22.11.1995
(73) Titulaire: ALCATEL ALSTHOM COMPAGNIE GENERALE D'ELECTRICITE, 75008 Paris (FR)
(72) Inventeur: Simon, Bernard, F-92130 Issy les Moulineaux (FR); Boeuve, Jean-Pierre, F-91460 Marcoussis (FR)
(74) Mandataire: Laroche, Danièle

(56) Documents cités:
- EP-A- 0 582 410
- CHEMICAL ABSTRACTS, vol. 121, no. 2, 11 Juillet 1994, Columbus, Ohio, US; abstract no. 13945, 'Secondary Nonaqueous Batteries with Improved Solvent Mixtures'
- CHEMICAL ABSTRACTS, vol. 121, no. 6, 8 Août 1994, Columbus, Ohio, US; abstract no. 60163, KIDA YOSHINORI 'Secondary Lithium Batteries with Expanded Graphite Anodes'

## Description

La présente invention concerne un générateur électrochimique rechargeable au lithium à anode de carbone.

Afin d'éviter le phénomène de croissance dendritique, le lithium métallique utilisé jusqu'à présent comme anode tend à être remplacé par des composés dans lesquels viennent s'intercaler des ions lithium, la réduction se produisant à un potentiel proche de celui du lithium métallique. De nombreux travaux concernent les matériaux carbonés capables d'intercaler du lithium entre leurs plans graphitiques. Parmi les matériaux carbonés existants, les plus indiqués tant du point de vue de la thermodynamique que de la cinétique d'intercalation sont ceux qui présentent le plus grand degré de cristallinité. En effet la présence de défauts structuraux augmente la valeur du potentiel d'intercalation par rapport au potentiel du lithium métallique et limite la mobilité des ions dans le matériau. Ainsi les graphites permettent d'atteindre effectivement la capacité réversible théorique qui est de 370mAh/g de carbone.

Lorsque l'on met en oeuvre un matériau carboné à degré de cristallinité élevé, on observe toutefois une exfoliation du matériau carboné se traduisant par des pertes de capacité irréversibles, plus ou moins importantes suivant l'ampleur du phénomène. L'exfoliation est principalement due à l'intercalation d'ions lithium provenant de l'électrolyte où ils se trouvent solvatés par des molécules de solvant. Ces molécules se co-intercalent avec l'ion lithium entre les plans graphitiques et provoquent l'exfoliation du matériau. Celle-ci est certainement due à la réduction électrochimique du solvant à l'intérieur de la structure.

Pour minimiser ce phénomène, une première solution consiste à modifier le matériau carboné. On a envisagé l'emploi de matériaux de structure plus désordonnée comme par exemple celui cité dans le brevet EP-0 357 001, mais ce type de matériaux se révèlent moins performants que les matériaux cristallisés (200mAh/g). On a également pensé à modifier la surface des particules de graphite en les recouvrant d'un matériau plus désordonné que le coeur de la particule, comme décrit par exemple dans le brevet EP-0 520 667, mais la réalisation de ce revêtement est difficile et le matériau obtenu présente une cinétique d'insertion diminuée.

Une autre solution possible pour limiter l'exfoliation du carbone est l'introduction d'un additif dans l'électrolyte. L'ajout d'un éther-couronne (12-crown-4) à la même concentration que le sel de lithium dans un électrolyte à base de carbonate de propylène est mentionné par DAHN et al. (Physical Review B, 24 n°10 (1990) 6424-6432). CHUSID et al. (Jnl. of Power Sources, 43-44 (1993) 47-64) évoque également l'ajout d'un éther-couronne mais assurent obtenir un taux d'intercalation plus faible qu'avec un électrolyte à base de formiate de méthyle contenant du dioxyde de carbone. Ces additifs abaissent la conductivité de l'électrolyte, et de plus sont d'un coût élevé.

La présente invention concerne en particulier un générateur électrochimique rechargeable dont l'énergie massique et volumique est élevée et reste stable pendant toute sa durée d'utilisation. Elle concerne en particulier un générateur à anode de carbone dans lequel l'exfoliation du matériau carboné est minimisée

La présente invention propose à cet effet un générateur électrochimique rechargeable au lithium comportant une cathode, une anode contenant un matériau carboné dont le degré de cristallinité est supérieur à 0,8 et un électrolyte comprenant un sel de lithium et un mélange d'au moins deux solvants organiques aprotiques dont le premier solvant a une constante diélectrique élevée et dont le deuxième solvant a une faible viscosité, caractérisé par le fait que l'électrolyte contient en outre un composé soluble, de même nature que l'un au moins desdits solvants et comportant au moins une liaison insaturée, susceptible de se réduire sur l'anode à un potentiel supérieur à 1 Volt par rapport au lithium pour former une couche de passivation.

Le degré de cristallinité, encore appelé degré de graphitisation d_{g} d'un matériau carboné est défini à partir de la distance entre les plans graphitiques, qui est 0,3354nm pour un cristal parfait de graphite, par la relation: d_{g} = (0,344 - d₀₀₂) / 0,0086 où d₀₀₂ est la distance entre les plans graphitiques obtenue par des moyens classiques de spectroscopie de Rayons X. Le degré de graphitisation d'un cristal parfait de graphite vaut 1. Un degré de cristallinité supérieur à 0,8 signifie que le matériau carboné de l'anode est très cristallisé. On utilisera donc de préférence le graphite naturel ou artificiel et certaines fibres, dites de graphite, traitées à haute température. Tous ces matériaux présentent un degré de cristallinité élevé et une taille importante des cristallites.

Lors de la première charge du générateur, le composé soluble ajouté dans l'électrolyte a pour rôle de se réduire à un potentiel supérieur au potentiel d'intercalation des ions lithium solvatés. En se réduisant, il forme sur le matériau carboné une couche de passivation avant toute intercalation de lithium. Celle-ci constitue une barrière physique empêchant l'intercalation des molécules de solvants entourant les ions lithium. Ainsi l'ion lithium pénètre seul dans le carbone et l'exfoliation est empêchée.

Le composé est de même nature que l'un au moins des solvants et comporte au moins une liaison insaturée. Ainsi la couche de passivation formée sera de même nature que celle obtenue dans les électrolytes classiques analogues ne contenant pas le composé. La présence d'une liaison insaturée facilite la réduction du composé à un potentiel élevé.

Selon un mode de réalisation préférentiel, ledit mélange de solvants comporte au moins un carbonate dont les liaisons sont saturées et ledit composé est choisi parmi le carbonate de vinylène et ses dérivés. On entend par dérivés du carbonate de vinylène des composés possèdant au moins une liaison insaturée reliée à un atome de carbone du cycle, comme par exemple le carbonate de propylidène, le carbonate d'éthylidène éthylène (ou 4-éthylidène 1-3 dioxolane 2 one), ou le carbonate d'isopropylidène éthylène (ou 4-isopropylidène 1-3 dioxolane 2 one) représentés respectivement ci-après:

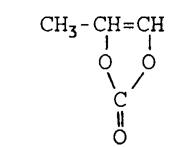

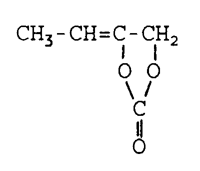

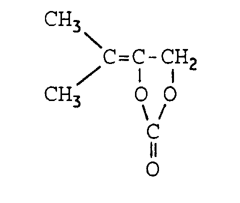

De préférence, ledit composé est ajouté dans une proportion de 0,01% à 10% en poids dudit mélange de solvants. En général cette quantité est suffisante. Pour des graphites de très grande surface spécifique, une quantité plus importante peut être nécessaire. On peut ainsi ajouter jusqu'à 50% dudit composé sans inconvénient.

Les mélanges de solvants, utilisés dans les électrolyte de forte conductivité pour ce type de générateur, comportent généralement plusieurs solvants dont au moins un premier solvant a une constante diélectique ε est supérieure à 20 favorisant la dissociation du sel de lithium et un deuxième solvant a une viscosité η à température ambiante est inférieure à 0,8cP améliorant la mobilité ionique. A ces deux solvants peuvent être ajoutés d'autres solvants dont les caractéristiques peuvent être différentes.

De préférence, le premier solvant est choisi parmi les carbonates d'éthylène (EC) (ou 1-3 dioxolane 2 one) et de propylène (PC) (ou 4-méthyl 1-3 dioxolane 2 one), le carbonate de dipropyle, les anhydrides d'acide, la n-méthylpyrrolidone, la n-méthylacétamide (MA), la n-méthylformamide, la diméthylformamide (DMF), la γ-butyrolactone (γ-But), l'acétonitrile, le sulfolane, le diméthylsulfoxyde (DMSO) et le sulfite de diméthyle (DMS).

De préférence encore, le deuxième solvant est choisi parmi les éthers, comme le 1,2-diéthoxyéthane (DEE), le 1,2-diméthoxyéthane (DME) et le 1,2-dibutoxyéthane (DBE), les esters, comme l'acétate, le butyrate, le propionate et le formiate d'éthyle ou de méthyle, les carbonates de diéthyle (DEC) et de diméthyle (DMC), le 1,3-dioxolanne (DOL) et ses dérivés, comme le méthyldioxolanne (MeDOL), le tétrahydrofuranne (THF) et ses dérivés, comme le 2-méthyltétrahydrofuranne (MeTHF), et l'oxyde de propylène (PO).

On peut ainsi utiliser la plupart des mélanges d'au moins deux solvants habituellement employés dans les générateurs électrochimiques au lithium et comportant un premier solvant de constante diélectrique élevée et un deuxième solvant de faible viscosité.

Ledit sel de lithium est choisi parmi le perchlorate de lithium LiClO₄, l'hexafluoroarsénate de lithium LiAsF₆, l'hexafluorophosphate de lithium LiPF₆, le tétrafluoroborate de lithium LiBF₄, le trifluorométhanesulfonate de lithium LiCF₃SO₃, le trifluorométhanesulfonimide de lithium LiN(CF₃SO₂)₂, le trifluorométhanesulfoneméthide de lithium LiC(CF₃SO₂)₃ et leurs mélanges.

Ladite cathode est choisie parmi une cathode à base d'oxyde de métaux de transition choisis parmi les oxydes lithiés de manganèse, nickel, cobalt, et leurs mélanges.

D'autres caractéristiques et avantages de la présente invention apparaitront à la lecture des exemples suivants de modes de réalisation, donnés bien entendu à titre illustratif et non limitatif, en référence au dessin annexé sur lequel:
- la figure 1 représente la courbe de première charge et décharge d'un générateur selon l'art antérieur qui montre la présence d'un phénomène d'exfoliation notable,
- la figure 2 représente la courbe de première charge et décharge d'un générateur selon la présente invention,
- la figure 3 représente la courbe de première charge et décharge d'une variante d'un générateur selon l'art antérieur qui montre la présence d'un phénomène d'exfoliation notable,
- la figure 4 représente la courbe de première charge et décharge d'une variante d'un générateur selon la présente invention.

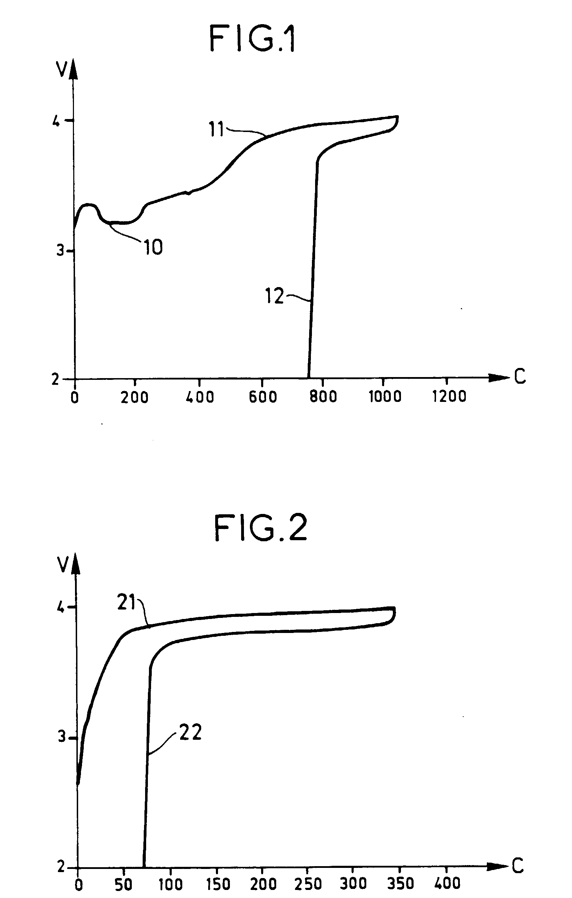

Sur les figures 1 à 4, la tension V du générateur en Volts est donné en ordonné, et en abcisse la capacité massique C du générateur en mAh/g rapportée au poids de carbone dans l'anode.

### EXEMPLE 1 Art antérieur

On réalise une électrode à partir du mélange de 90% en poids de matériau carboné très cristallisé de type graphite avec 5% de noir d'acétylène de référence "YS" et 5% de polytétrafluoroéthylène PTFE.

La pastille est ensuite montée comme anode dans un générateur rechargeable de type bouton de format CR 2430 (diamètre 24mm, épaisseur 3mm) face à une cathode d'oxyde de cobalt. La cathode d'oxyde lithié est dimensionnée pour être surcapacitive afin d'observer les phénomènes se produisant à l'anode.

Le générateur contient aussi un séparateur en polyéthylène microporeux commercialisé sous la référence "CELGARD 2502" de la société CELANESE CORPORATION et un électrolyte comportant un mélange de solvants et un sel de lithium. Le mélange de solvants est composé d'une partie en poids de carbonate de propylène PC (ε=64,4 à 25°C), d'une partie en poids de carbonate d'éthylène EC (ε=95,3 à 25°C) et de deux parties en poids de carbonate de diméthyle DMC (η=0,6cP à 25°C). Le sel de lithium est le trifluorométhanesulfonimide de lithium LiTFSI (LiN(CF₃SO₂)₂) qui est ajouté à une concentration de 1M.

Le générateur est alors testé à température ambiante en cyclage galvanostatique à un régime de 20mA/g de carbone, en charge jusqu'à une tension de 4 Volts et en décharge jusqu'à une tension 2 Volts. La courbe 11 de la figure 1 représente la première charge du générateur selon l'art antérieur sur laquelle on peut observer le renflement 10 signe de l'importance du phénomène d'exfoliation du carbone. La courbe 12 de la figure 1 représente la décharge suivante du générateur.

Bien que 1050mAh/g de carbone aient été chargés, la décharge n'a restitué que 300mAh/g. Les pertes liées à l'exfoliation du carbone sont donc très importantes puisqu'elles représentent plus de 70% de la capacité chargée.

### EXEMPLE 2

On réalise un générateur selon la présente invention analogue à celui décrit dans l'exemple 1 mais contenant un électrolyte analogue dans lequel on a ajouté 5% en poids de carbonate de vinylène VC par rapport au mélange de solvants.

Les conditions de tests sont analogues à celles données dans l'exemple 1. La courbe 21 de la figure 2 représente la première charge du générateur sur laquelle on n'observe plus de renflement: en présence de VC il ne se produit plus d'exfoliation du carbone. La courbe 22 de la figure 2 représente la décharge suivante du générateur.

La décharge a restitué 275mAh/g sur les 350mAh/g qui avaient été chargés, soit près de 79% de la capacité chargée. La capacité réellement intercalée est donc notablement plus importante pour le générateur selon la présente invention.

### EXEMPLE 3 Art antérieur

On réalise un générateur selon l'art antérieur analogue à celui décrit dans l'exemple 1 mais contenant un électrolyte comportant un mélange de solvants composé d'une partie en poids de carbonate d'éthylène EC (ε=95,3 à 25°C), et d'une partie en poids de carbonate de diméthyle DMC (η=0,6cP à 25°C).

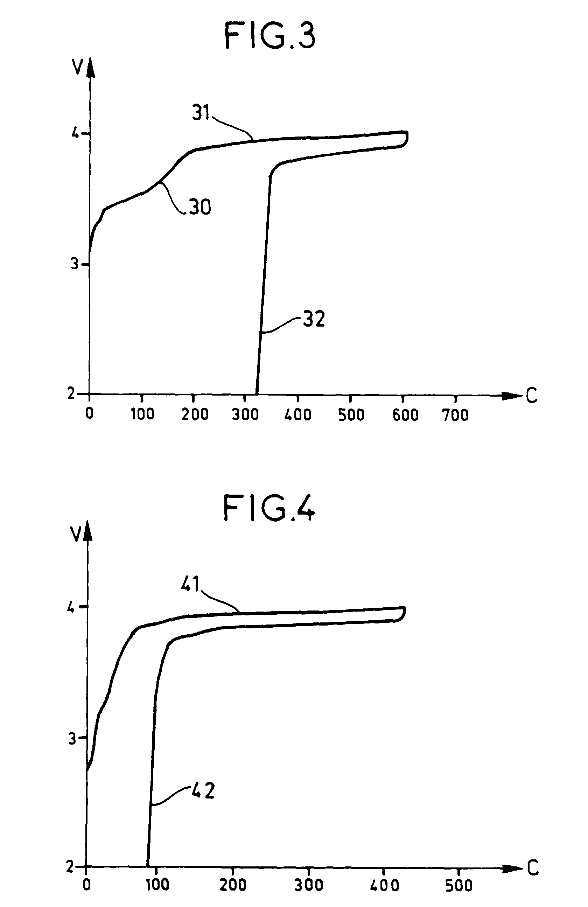

Les conditions de tests sont analogues à celles données dans l'exemple 1. La courbe 31 de la figure 3 représente la première charge du générateur selon l'art antérieur sur laquelle on peut observer le renflement 30 signe de l'exfoliation du carbone. La courbe 32 de la figure 3 représente la décharge suivante du générateur.

Bien que 610mAh/g aient été chargés, la décharge n'a restitué que 300mAh/g. Les pertes liées à l'exfoliation du carbone sont donc très importantes puisqu'elles représentent près de 50% de la capacité chargée.

### EXEMPLE 4

On réalise un générateur selon la présente invention analogue à celui décrit dans l'exemple 1 mais contenant un électrolyte analogue à celui de l'exemple 3 dans lequel on a ajouté 5% en poids de carbonate de vinylène VC par rapport au mélange de solvants.

Les conditions de tests sont analogues à celles données dans l'exemple 1. La courbe 41 de la figure 4 représente la première charge du générateur sur laquelle on n'observe plus de renflement: en présence de VC il ne se produit plus d'exfoliation du carbone. La courbe 42 de la figure 4 représente la décharge suivante du générateur.

La décharge a restitué 330mAh/g sur les 420mAh/g qui avaient été chargés, soit près de 79% de la capacité chargée. La capacité réellement intercalée est donc notablement plus importante pour le générateur selon la présente invention.

Bien que les différents exemples décrivent de générateurs de type bouton, l'invention s'applique tout aussi bien à des générateurs cylindriques ou prismatiques.

## Revendications

1. Générateur électrochimique rechargeable au lithium comportant une cathode, une anode contenant un matériau carboné dont le degré de cristallinité est supérieur à 0,8 et un électrolyte comprenant un sel de lithium et un mélange d'au moins deux solvants organiques aprotiques dont le premier solvant a une constante diélectrique élevée et dont le deuxième solvant a une faible viscosité, caractérisé par le fait que ledit électrolyte contient en outre un composé soluble, de même nature que l'un au moins desdits solvants et comportant au moins une liaison insaturée, susceptible de se réduire sur ladite anode à un potentiel supérieur à 1 Volt par rapport au lithium pour former une couche de passivation.

2. Générateur selon la revendication 1, dans lequel ledit mélange de solvants comporte au moins un carbonate dont les liaisons sont saturées et ledit composé est choisi parmi le carbonate de vinylène et ses dérivés.

3. Générateur selon la revendication 2, dans lequel ledit composé est ajouté dans une proportion de 0,01% à 10% en poids dudit mélange de solvants

4. Générateur selon l'une des revendications précédentes, dans lequel ledit premier solvant est choisi parmi les carbonates d'éthylène et de propylène, le carbonate de dipropyle, les anhydrides d'acide, la n-méthylpyrrolidone, la n-méthylacétamide, la n-méthylformamide, la diméthylformamide, la γ-butyrolactone, l'acétonitrile, le sulfolane, le diméthylsulfoxyde et le sulfite de diméthyle.

5. Générateur selon l'une des revendications précédentes, dans lequel ledit deuxième solvant est choisi parmi les éthers, les esters, les carbonates de diéthyle et de diméthyle, le dioxolanne et ses dérivés, le tétrahydrofuranne et ses dérivés et l'oxyde de propylène.

6. Générateur selon l'une des revendications précédentes, dans lequel ledit sel de lithium est choisi parmi le perchlorate de lithium, l'hexafluoroarsénate de lithium, l'hexafluorophosphate de lithium, le tétrafluoroborate de lithium, le trifluorométhanesulfonate de lithium, le trifluorométhanesulfonimide de lithium, le trifluorométhanesulfoneméthide de lithium et leurs mélanges.

7. Générateur selon l'une des revendications précédentes, dans lequel ladite cathode est choisie parmi une cathode à base d'oxyde de métaux de transition choisis parmi les oxydes lithiés de manganèse, nickel, cobalt, et leurs mélanges.

## Patentansprüche

1. Lithium-Sekundärbatterie mit einer Kathode, einer ein Kohlenstoffmaterial mit einem Kristallinitätsgrad von über 0,8 enthaltenden Anode und einem ein Lithiumsalz und eine Mischung von mindestens zwei organischen aprotischen Lösungmitteln enthaltenden Elektrolyt, wobei das erste Lösungsmittel eine hohe Dielektrizitätskonstante und das zweite eine niedrige Viskosität aufweist, dadurch gekennzeichnet, daß der Elektrolyt außerdem eine lösliche Verbindung enthält, die gleicher Natur ist wie mindestens eines der genannten Lösungsmittel und die mindestens eine ungesättigte Bindung aufweist, die zur Reduktion an dieser Anode bei einem Potential von mehr als 1 Volt in bezug auf Lithium befähigt ist, um eine Passivierungsschichte zu bilden.

2. Batterie nach Anspruch 1, in welcher die genannte Mischung der Lösungsmittel mindestens ein Carbonat enthält, dessen Bindungen gesättigt sind, und die genannte Verbindung aus Vinylencarbonat und seinen Derivaten ausgewählt ist.

3. Batterie nach Anspruch 2, in welcher die genannte Verbindung in einem Verhältnis von 0,01 % bis 10 %, bezogen auf das Gewicht der Lösungsmittelmischung, zugesetzt ist.

4. Batterie nach einem der vorhergehenden Ansprüche, in welcher das erste Lösungsmittel aus Ethylen- und Propylencarbonaten, Dipropylcarbonat, Säureanhydriden, n-Methylpyrrolidon, n-Methylacetamid, n-Methylformamid, Dimethylformamid, gamma-Butyrolacton, Acetonitril, Sulfolan, Dimethylsulfoxid und Dimethylsulfit ausgewählt ist.

5. Batterie nach einem der vorhergehenden Ansprüche, in welchem das genannte zweite Lösungmittel aus Diethyl- und Dimethylethern, -estern, Carbonaten, Dioxolan und seinen Derivaten, Tetrahydrofuran und seinen Derivaten und Propylenoxid ausgewählt ist.

6. Batterie nach einem der vorhergehenden Ansprüche, in welcher das genannte Lithiumsalz aus Lithiumperchlorat, Lithiumhexafluorarsenat, Lithiumhexafluorphosphat, Lithiumtetrafluorborat, Lithiumtrifluormethansulfonat, Lithiumtrifluormethansulfonimid, Lithiumtrifluormethansulfonmethid und deren Mischungen ausgewählt ist.

7. Batterie nach einem der vorhergehenden Ansprüche, in welcher die genannte Kathode aus Kathoden auf Basis Oxid von Übergangsmetallen, ausgewählt aus den lithiierten Oxiden von Mangan, Nickel, Cobalt und deren Mischungen, ausgewählt ist.

## Claims

1. A rechargeable lithium electrochemical cell comprising a cathode, an anode containing a carbon-containing material with a degree of crystallinity which is greater than 0.8 and an electrolyte comprising a lithium salt and a mixture of at least two aprotic organic solvents, of which the first solvent has a high dielectric constant and the second solvent has low viscosity, characterized in that the electrolyte further contains a soluble compound of the same type as at least one of said solvents and contains at least one unsaturated bond, and which can be reduced at the anode at a potential of more than 1 volt with respect to lithium to form a passivation layer.

2. A cell according to claim 1, in which said mixture of solvents comprises at least one carbonate in which the bonds are saturated and said compound is selected from vinylene carbonate and its derivatives.

3. A cell according to claim 2, in which said compound is added in a proportion of 0.01% to 10% by weight of said mixture of solvents.

4. A cell according to any one of the preceding claims, in which said first solvent is selected from ethylene and propylene carbonates, dipropyl carbonate, acid anhydrides, n-methyl pyrrolidone, n-methyl acetamide, n-methyl formamide, dimethyl formamide, γ-butyrolactone, acetonitrile, sulfolane, dimethyl sulfoxide and dimethyl sulfite.

5. A cell according to any one of the preceding claims, in which said second solvent is selected from ethers, esters, diethyl and dimethyl carbonates, dioxolane and its derivatives, tetrahydrofuran (THF) and its derivatives, and propylene oxide.

6. A cell according to any one of the preceding claims, in which said lithium salt is selected from lithium perchlorate, lithium hexafluoroarsenate, lithium hexafluorophosphate, lithium tetrafluoroborate, lithium trifluoromethane sulfonate, lithium trifluoromethane sulfonimide, and lithium trifluoromethane sulfone methide, and their mixtures.

7. A cell according to any one of the preceding claims, in which said cathode is selected from a transition metal based cathode selected from lithiated oxides of manganese, nickel, and cobalt, and their mixtures.
